Europäisches Patentamt

(19) European Patent Office

Office européen des brevets

(11) Publication number: **0 105 036**
**A2**

(12) # EUROPEAN PATENT APPLICATION

(21) Application number: 83850226.8

(22) Date of filing: 29.08.83

(51) Int. Cl.³: **B 66 C 1/02**
**B 25 J 15/06**

(30) Priority: 29.09.82 SE 8205546

(43) Date of publication of application:
04.04.84 Bulletin 84/14

(84) Designated Contracting States:
DE FR GB IT SE

(71) Applicant: AB Mecman
P.O.Box 32035
S-126 11 Stockholm(SE)

(72) Inventor: Carlsson, Lars
Stalhamravägen 38
S-151 47 Södertälje(SE)

(74) Representative: Lundquist, Lars-Olof
L-O Lundquist Patentbyra Box 80
S-651 03 Karlstad(SE) .

(54) A means in a safety system for manipulating equipments.

(57) A means in a safety system for manipulating equipments.

The equipment comprises one or more suction cups (1) arranged to carry objects by means of suction, the suction cup (1) being connected to a vacuum suction force (2) via a hose connection and a first safety valve (5) of non-return type for application of vacuum in a vacuum chamber (9) in the suction cup, and also to a compressed air source via a hose connection and a second safety valve (7) of non-return type.

According to the invention the first safety valve (5) is arranged in an evacuation channel (6) in the suction cup (1) and the second safety valve (7) is arranged in an air-inflow channel (8) in the suction cup. The safety valves (5, 7) are arranged in direct connections to said vacuum chamber (9), and said connections are free from construction elements such as hose connections in which ruptures or other leakage might occur.

EP 0 105 036 A2

A means in a safety system for manipulating equipments

The present invention relates to a means in a safety system for manipulating equipments comprising one or more suction cups arranged to carry objects having flat surface areas by means of suction effect, the suction cup being connected to a vacuum suction source via a hose connection and a first safety valve of non-return type for application of a vacuum in a vacuum chamber in the suction cup upon contact with the object, and also to a compressed air source via a hose connection and a second safety valve of non-return type.

The object of the present invention is to provide a means in a safety system of the type described above for manipulating equipments, such as hoisting beams and robots having vacuum function, said means enabling considerably increased safety so that a carried load will not be unintentionally released from the manipulating equipment and fall down in the event of a rupture in the hoses or the evacuating function in the system is reduced or completely lost due to a fault in the vacuum source.

The novelty of the invention lies primarily in that said first safety valve is arranged in an evacuation channel in the suction cup, and that said second safety valve is arranged in an air-inflow channel in the suction cup, the first and second safety valves being arranged in direct connections to said vacuum chamber, said connections being free from construction elements such as hose connections in which ruptures or other leakage might occur, whereby the first safety valve is arranged to prevent the object from becoming detached from the suction cup in the event of rupture or leakage in the hose connection between the first safety valve and the vacuum suction source or in the event of interruption of the service of the vaccum suction source, and whereby said second safety valve is arranged to prevent the object from becoming detached from the suction cup in the event of rupture or leakage in the hose connection between the second safety valve and said source of compressed air.

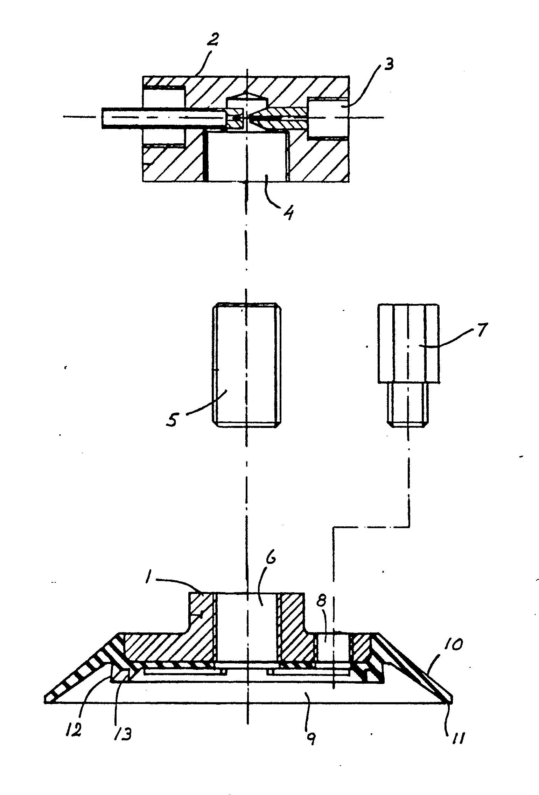

The invention will be described further in the following with reference to the accompanying drawing which shows schematically a safety system comprising a suction cup and an ejector driven by compressed air.

The drawing shows schematically essential parts of the new safety system proposed according to the present invention, for manipulating equipments such as vacuum-operated hoisting beams and robots. The manipulating equipment comprises one or more suction cups 1, arranged to carry an object or article with a predetermined suction force with the necessary margin of safety from the point at which suction grip on the object ceases. The manipulating equipment may be designed for loads from a few kilograms up to three tons, for instance, and may be used for handling a diversity of objects, such as sheets of different types of material, e.g. sheet-metal, glass, particle board and cardboard.

The suction cup 1 is connected to a vacuum suction source. This may be a vacuum air pump which may be electrically driven or, as shown in the drawing, an ejector 2 driven by compressed air introduced via a channel 3 to provide vacuum in a channel 4 in the ejector 2. The ejector 2 is in communication with the suction cup 1 via a first safety valve 5 of non-return type which is mounted either by hose connection to the ejector 2 or with its upper end directly in channel 4 of the ejector 2. Furthermore, the safety valve 5 is mounted with its lower end directly in a central channel 6 of the suction cup. The central channel 6 is in direct communication with a vacuum chamber 9 which is encompassed by the suction cup 1 and an object carried by the suction cup. The safety system also includes a second safety valve 7 of non-return type which is mounted at its lower end into a channel 8, said channel being arranged radially at the side of the central channel and also being in direct communication with the vacuum chamber 9 encompassed by the suction cup together with an object to which the suction cup shall adhere.

The vacuum chamber 9 of the suction cup is defined by a conical, elastic wall 10. The peripheral free edge 11 of the wall 10 is arranged to press against the object to be lifted. In the vacuum chamber there are two concentric sealing flanges 12, 13, the free peripheral edges of which being placed radially inside and axially spaced from the plane of the edge 11 of the conical wall 10.

The function is such that when the ejector is connected, a vacuum (negative pressure) is produced and is maintained in the vacuum chamber 9 of the suction cup when the air is evacuated therefrom via the first safety valve 5. The object is thus adhered by suction to the free elastic walls or edges 11 of the suction cup. In the event of the evacuating function ceasing to act on the suction cup due to a rupture in the hose connection between the first safety valve 5 and channel 4 of the ejector 2, or due to the supply of compressed air to channel 3 of the ejector 2 ceasing to function for some reason, the first safety valve 5 will prevent the vacuum in vacuum chamber 9 from being lost, which would otherwise result in the object becoming detached from the suction cup. Since the first safety valve is mounted directly on the suction cup, its function is ensured since there is no hose connection between the first safety valve 5 and the suction cup 1 in which rupture or leakage could occur.

When the object has been transferred to a desired place and shall be released from the suction cup or cups 1, compressed air is blown into the channel 8 via a hose connection (not shown) from a compressed air source, this compressed air being introduced through the second safety valve 7, into the vacuum chamber 9 of the suction cup so that the suction action against the object immediately ceases. In the event of a rupture or leakage occurring in said hose connection to the second safety valve 7, the second safety valve will prevent air from penetrating unintentionally into the suction cup, which would otherwise cause the object to become detached from the suction cup.

In other words, the suction cup and the two safety valves form a unit so that each suction cup will have an inherent safety system.

The present invention thus considerably improves the safety system. Another valuable advantage of the present invention is that one and the same vacuum source, e.g. the shown ejector driven by compressed air, can serve several suction cups thanks to the described location of said first safety valve, which offers considerable simplification of the construction.

# C L A I M S

1.     A means in a safety system for manipulating equipments comprising one or more suction cups (1) arranged to carry objects having flat surface areas by means of suction effect, the suction cup (1) being connected to a vacuum suction source (2) via a hose connection and a first safety valve (5) of non-return type for application of a vacuum in a vacuum chamber (9) in the suction cup upon contact with the object, and also to a compressed air source via a hose connection and a second safety valve (7) of non-return type, characterised in that said first safety valve (5) is arranged in an evacuation channel (6) in the suction cup (1), and that said second safety valve (7) is arranged in an air-inflow channel (8) in the suction cup, the first and second safety valves (5, 7) being arranged in direct connections to said vacuum chamber (9), said connections being free from construction elements such as hose connections in which ruptures or other leakage might occur, whereby the first safety valve (5) is arranged to prevent the object from becoming detached from the suction cup (1) in the event of rupture or leakage in the hose connection between the first safety valve (5) and the vacuum suction source (2) or in the event of interruption of the service of the vacuum suction source, and whereby the second safety valve (7) is arranged to prevent the object from becoming detached from the suction cup in the event of rupture or leakage in the hose connection between the second safety valve (7) and said source of compressed air.

2.     A means according to claim 1, characterised in that the vacuum chamber (9) of the suction cup (1) is defined by a conical, elastic wall (10), the peripheral free edge (11) of which is arranged to press against the object and that two concentric sealing flanges (12, 13) are arranged in the vacuum chamber (9), the free peripheral edges of said sealing flanges being arranged radially inside and axially spaced from the plane of the peripheral edge (11) of said conical wall (10).

3.    A means according to claim 1 or 2, characterised in that one and the same vacuum suction source serves two or more suction cups.